# EUROPÄISCHE PATENTANMELDUNG

(11) **EP 3 756 809 A1**
(43) Veröffentlichungstag der Anmeldung: **30.12.2020**
(21) Anmeldenummer: 20182436.4
(22) Anmeldetag: 26.06.2020
(51) Int. Cl.: B23F 1/02, B23F 5/02, B23F 19/00

(54) **VERFAHREN ZUR FERTIGUNG EINES VERZAHNUNGSBAUTEILS UND VERZAHNUNGSSCHLEIFMASCHINE**

(30) Priorität: 26.06.2019 DE 102019209201
(71) Anmelder: ZF Friedrichshafen AG, 88046 Friedrichshafen (DE)
(72) Erfinder: Hoener, Franz-Josef, 57515 Alsting (FR); Klein, Frank, 66265 Heusweiler (DE); Barrois, Thomas, 66119 Saarbrücken (DE)

(57) **Zusammenfassung**

Bei der Fertigung von Verzahnungen durchläuft ein zu bearbeitendes Werkstück üblicherweise eine mehrstufige Prozesskette, welche zumindest eine Weichbearbeitung und eine anschließende Hartfeinbearbeitung umfasst. Es ist eine Aufgabe der Erfindung, ein Verfahren zu schaffen, welches sich durch eine kostengünstige und taktzeitreduzierte Fertigung von Verzahnungsbauteilen auszeichnet.

Hierzu wird ein Verfahren zur Fertigung eines Verzahnungsbauteils vorgeschlagen, bei dem in einem Weichbearbeitungsprozess eine Vorverzahnung 3 mit einem gegenüber einer Endverzahnung 4 festgelegten Aufmaß 7 in ein Rohteil eingebracht wird, sodass ein Halbfertigteil 2 erzeugt wird; in einem Feinbearbeitungsprozess das Aufmaß 7 abgetragen wird und die Endverzahnung 4 des Verzahnungsbauteils hergestellt wird, wobei das Aufmaß 7 in einem einstufigen Wälzschleifverfahren mittels eines Schleifwerkzeugs 1 abgetragen wird, wobei das Schleifwerkzeug 1 das Aufmaß in einer einzigen Hubbewegung H vollständig abträgt.

## Beschreibung

Die Erfindung betrifft ein Verfahren zur Fertigung eines Verzahnungsbauteils mit den Merkmalen des Oberbegriffs des Anspruchs 1. Ferner betrifft die Erfindung eine Verzahnungsschleifmaschine zur Durchführung des Verfahrens.

Bei der Fertigung von Verzahnungen durchläuft ein zu bearbeitendes Werkstück üblicherweise eine mehrstufige Prozesskette, welche zumindest eine Weichbearbeitung und eine anschließende Hartfeinbearbeitung umfasst. Dabei wird bei der Weichbearbeitung eine Vorverzahnung und bei der Hartfeinbearbeitung eine Endkontur erzeugt. Es sind unterschiedliche Verfahren der Hartfeinbearbeitung, wie z.B. das Honen oder Wälzschleifen, bekannt, wobei insbesondere beim Wälzschleifen das Werkstück in der Regel in einem zweistufigen Schleifprozess bearbeitet wird, welcher sich aus einem Schrupp- und einem Schlichthub zusammensetzt.

Die Druckschrift DE 10 2008 035 525 B3, die wohl den nächstkommenden Stand der Technik bildet, offenbart ein Verfahren zum Herstellen eines Werkstücks mit einer zylindrischen Grundkontur, an dessen Außenumfang ein schraubenförmiges Profil angeordnet ist, insbesondere eines Schraubenverdichterrotors, das die Schritte aufweist: a) Vorbearbeiten des Werkstücks durch Einbringung des Profils mit gegenüber der Endkontur vorhandenem Aufmaß, Vorschleifen des Profils in einem Schrupp-Arbeitsgang in einer Schleifmaschine, bei dem ein Teil des Aufmaßes abgetragen wird, und c) Fertigschleifen des Profils in einem Schlicht-Arbeitsgang in der Schleifmaschine, bei dem der Rest des Aufmaßes abgetragen und die Endkontur des Profils hergestellt wird, wobei das Vorschleifen und/oder das Fertigschleifen mit einem schneckenförmigen Schleifwerkzeug im kontinuierlichen Wälzschleifverfahren durchgeführt wird.

Der Erfindung liegt die Aufgabe zugrunde, ein Verfahren der eingangs genannten Art zu schaffen, welches sich durch eine kostengünstige und taktzeitreduzierte Fertigung von Verzahnungsbauteilen bei gleichbleibender Qualität, insbesondere bei gleichbleibender Qualität hinsichtlich metallographischer wie auch verzahnungsgeometrischer Eigenschaften auszeichnet. Ferner ist es Aufgabe der Erfindung eine entsprechende Verzahnungsschleifmaschine zur Durchführung des Verfahrens vorzuschlagen.

Diese Aufgabe wird erfindungsgemäß durch ein Verfahren mit den Merkmalen des Anspruchs 1 sowie durch eine Verzahnungsschleifmaschine mit den Merkmalen des Anspruchs 13 gelöst. Vorteilhafte Ausgestaltungen ergeben sich aus den Unteransprüchen, den Zeichnungen und/oder der Beschreibung.

Gegenstand der Erfindung ist ein Verfahren, welches zur Fertigung eines Verzahnungsbauteils geeignet ist. Insbesondere ist das zu fertigende Verzahnungsbauteil ein Zahnrad, vorzugsweise ein Planetenrad.

In einem ersten Schritt des Verfahrens wird in einem Weichbearbeitungsprozess eine Vorverzahnung in ein Rohteil eingebracht. Insbesondere wird die Vorverzahnung spanend, vorzugsweise mit geometrisch bestimmter Schneide, in das Rohteil eingebracht. Bevorzugt ist die Vorverzahnung durch eine in das Rohteil eingebrachte Zahnlückengeometrie definiert, welche eine endkonturnahe Form aufweist. Besonders bevorzugt weist das Rohteil eine zylindrische Grundkontur auf, wobei die Vorverzahnung in eine Mantelfläche des Rohteils eingebracht wird. Insbesondere wird das mit der Vorverzahnung versehene Werkstück nachfolgend als Halbfertigteil bezeichnet.

Die Vorverzahnung weist ein gegenüber einer Endverzahnung festgelegtes Aufmaß auf. Insbesondere ist das Aufmaß als eine Nachbearbeitungsschicht definiert, welche in einem nachfolgenden Prozess entfernt wird. Bevorzugt ist das Aufmaß ausschließlich an Zahnflanken der Vorverzahnung vorgesehen, wobei ein Zahngrund der Vorverzahnung bereits nach dem Weichbearbeitungsprozess auf Endkontur bearbeitet ist. Besonders bevorzugt wird in dem Weichbearbeitungsprozess eine sogenannte Protuberanz in einem Zahnfußbereich, insbesondere am Zahngrund und/oder am Zahnfuß, erzeugt, wodurch eine Bildung von Kerben und/oder Rissen in dem Zahnfußbereich beim Abtragen des Aufmaßes verhindert wird. Dabei ist unter Protuberanz eine Ausrundung und/oder ein Unterschnitt in dem Zahnfußbereich zu verstehen. Im Speziellen ist die Qualität, insbesondere das Aufmaß, der Vorverzahnung derart gewählt, dass eine nachfolgende Feinbearbeitung nicht beeinträchtigt wird und/oder wirtschaftlich durchgeführt werden kann. Besonders bevorzugt ist das Aufmaß möglichst gering zu wählen.

In einem weiteren Schritt wird in einem Feinbearbeitungsprozess das Aufmaß, insbesondere durch eine Hartfeinbearbeitung, abgetragen und die Endverzahnung des Verzahnungsbauteils hergestellt. Insbesondere dient der Feinbearbeitungsprozess dazu, fertigungsbedingte Maß- und Formabweichungen, welche sich aus den vorangehenden Prozessen ergeben, auszugleichen, die aus den vorangehenden Prozessen resultierende thermisch beeinflusste Randschicht des Bauteils vollständig zu entfernen und um eine hohe Oberflächengüte zu erzielen. Bevorzugt wird das Aufmaß spanend, vorzugsweise mit geometrisch unbestimmter Schneide, abgetragen. Bevorzugt wird in dem Feinbearbeitungsprozess ausschließlich das Aufmaß an den Zahnflanken abgetragen, wobei auf eine Zahngrundbearbeitung verzichtet wird. Die Endverzahnung kann beispielsweise als eine Geradverzahnung oder eine Schrägverzahnung, z.B. Evolventen- oder Zykloidenverzahnung, ausgebildet sein.

Im Rahmen der Erfindung wird vorgeschlagen, dass das Aufmaß in einem einstufigen Wälzschleifverfahren mittels eines Schleifwerkzeugs abgetragen wird. Insbesondere wird das Aufmaß in dem einstufigen Wälzschleifverfahren durch kontinuierliches Wälzschleifen gleichmäßig abgetragen. Vorzugsweise ist das Schleifwerkzeug als ein rotierendes Schleifwerkzeug ausgebildet, welches im Betrieb um eine Werkzeugdrehachse rotiert. Bevorzugt weist das Schleifwerkzeug eine geometrisch unbestimmte Schneide auf, welche durch eine Vielzahl von gebundenen Schleifkörner, deren Kanten als Schneiden fungieren, gebildet ist. In dem Feinbearbeitungsprozess erfolgt basierend auf einer Relativbewegung zwischen dem Schleifwerkzeug und dem zu bearbeitenden Halbfertigteil eine Spanabhebung, indem das relativ starre Schleifkorn auf einer vorgegebenen Bahn in die Nachbearbeitungsschicht der Zahnflanken eindringt und das Aufmaß abträgt. Dabei trägt das Schleifwerkzeug das Aufmaß in einer einzigen Hubbewegung vollständig ab. Insbesondere ist die Hubbewegung ein Schleifhub, bei dem das Schleifwerkzeug parallel zu dem zu bearbeitenden Halbfertigteil verfahren wird. Insbesondere beschreibt das einstufige Wälzschleifverfahren eine Bearbeitung des Halbfertigteils in einem Hub mit konstanten Stellgrößen und demzufolge auch konstantem Spanvolumen. Voraussetzung für das einhubige Wälzschleifverfahren ist ein streng definierter geometrischer Zustand des Halbfertigteils, welcher insbesondere in dem Weichbearbeitungsprozess sowie durch das gegebenenfalls gewählte Härteverfahren erzeugt wird.

Der Vorteil der Erfindung besteht darin, dass durch das einstufige Wälzschleifverfahren mit nur einem Schleifhub, die Schleifzeit bei mindestens gleichbleibender geometrischer Verzahnungsqualität deutlich reduziert werden kann. Dadurch können die Verzahnungsbauteile kostengünstiger gefertigt werden. Zudem kann eine Belastung des Schleifwerkzeugs deutlich reduziert und somit die Standzeit des Schleifwerkzeugs deutlich erhöht werden. Ferner kann eine effizientere und ökonomischere Prozessführung gegenüber dem Stand der Technik umgesetzt werden. Ein weiterer Vorteil besteht in einer Reduzierung des thermischen Einflusses auf die Randzonen, wodurch die Qualität des Verzahnungsbauteils verbessert wird.

In einer konkreten Ausführung ist vorgesehen, dass das Schleifwerkzeug bei der Hubbewegung in einem Gegenlauf-Schleifmodus betrieben wird. Insbesondere trägt das Schleifwerkzeug das Aufmaß im Gegenlauf ähnlich einer Schlichtbearbeitung ab, wobei die Schneiden des Schleifwerkzeugs nahezu tangential zu einer die Endverzahnung definierenden Sollgeometrie in die Nachbearbeitungsschicht eindringen und diese an einer Oberfläche der Nachbearbeitungsschicht wieder verlassen. Insbesondere dient das Gegenlaufschleifen der End- oder Fertigbearbeitung, wobei die Endverzahnung durch das Gegenlaufschleifen erzeugt ist. Es kann jedoch auch vorgesehen sein, dass nach dem Gegenlaufschleifen ein weiterer Fertigungsschritt, wie z.B. Polieren, folgt.

Da das Schleifkorn beim Gegenlauf bereits in der Fertigmaßtiefe in die Nachbearbeitungsschicht eindringt und dort dadurch eine geringe Spanabnahme herrscht, kann mit diesem Schleifmodus eine bessere Oberflächenqualität als bei einem Gleichlauf-Schleifmodus erzeugt werden. Zudem kann durch ein mit dem reduzierten Aufmaß einhergehendes relativ geringes mittleres bezogenes Zeitspanvolumen, ein kritischer Wärmeeintrag in der Randzone vermieden werden.

In einer weiteren Umsetzung ist vorgesehen, dass in dem Weichbearbeitungsprozess ein Aufmaß von maximal 50 Mikrometer erzeugt wird. Insbesondere beträgt das Aufmaß weniger als 50 Mikrometer, vorzugsweise weniger als 40 Mikrometer, im Speziellen weniger als 30 Mikrometer. Alternativ oder optional ergänzend beträgt das Aufmaß mehr als 30 Mikrometer, vorzugsweise mehr als 35 Mikrometer, im Speziellen mehr als 45 Mikrometer.

Durch die Reduzierung des Aufmaßes und damit auch der notwendigen Zustellung des Schleifwerkzeugs kann der Schleifprozess somit direkt über eine charakteristische Schleifgröße beeinflusst werden.

In einer bevorzugten Ausgestaltung ist das Schleifwerkzeug als eine Schleifschnecke ausgebildet. Insbesondere ist die Schleifschnecke als eine mehrgängige, vorzugsweise mindestens dreigängige, Schleifschnecke ausgebildet. Prinzipiell kann die Schleifschnecke als Kornwerkstoff Korund (Al2O3), Siliziumcarbid (SiC) oder synthetischer Diamant aufweisen. Bevorzugt weist die Schleifschnecke als Kornwerkstoff kubisches Bornitrid (CBN) auf. Im Speziellen können die Schleifkörner als Korund-Schleifkörner in keramischer Bindung oder als CBN-Schleifkörner in metallischer oder keramischer Bindung vorliegen. Vorzugsweise weist das Schleifkorn eine dreieckförmige oder stäbchenförmige Kontur auf.

Gemäß dieser Ausgestaltung wird das Aufmaß durch eine Abwälzkinematik zwischen Schleifwerkzeug und Halbfertigteil abgetragen. Insbesondere wälzen die Schleifschnecke und das Halbfertigteil analog zu einem Schneckengetriebe ineinander ab, wobei die Schnecke der Schleifschnecke und das Schneckenrad dem Halbfertigteil entspricht. Vorzugsweise ergibt sich ein Wälzvorschub aus einer vom Halbfertigteil ausgeführten rotatorischen und einer von der Schleifschnecke ausgeführten translatorischen Wälzkomponente.

Durch die Ausgestaltung des Schleifwerkzeugs als Schleifschnecke kann ein sehr hohes Zeitspanvolumen erzielt werden. Zudem können durch die Ausgestaltung als mehrgängige Schleifschnecke mehrere Zahnflanken zeitgleich geschliffen werden, wodurch die Bearbeitungszeit verkürzt sowie ein Schleifbrandrisiko infolge der deutlich kürzeren Kontaktzeit eines einzelnen Schleifkornes reduziert wird.

In einer weiteren Ausführung der Erfindung ist vorgesehen, dass das zu bearbeitende Halbfertigteil, insbesondere während des Feinbearbeitungsprozesses, um eine Werkstückachse rotiert wird, wobei die Hubbewegung als eine axial zu der Werkstückachse gerichtete Bewegung umgesetzt wird. Insbesondere ist die Hubbewegung eine parallel zu der Werkstückachse geradlinige Bewegung. Vorzugsweise wird die Hubbewegung mindestens über die gesamte Zahnbreite der Vorverzahnung durchgeführt. Während des Bearbeitungsvorgangs rotiert das Halbfertigteil um die Werkstückachse und das Schleifwerkzeug um eine zugehörige Werkzeugachse, wobei das Schleifwerkzeug während des Bearbeitungsvorgangs die Hubbewegung ausführt und das Halbfertigteil stationär verbleibt.

Durch die Hubbewegung kann somit eine vollumfängliche Bearbeitung über die gesamte Zahnbreite der Vorverzahnung umgesetzt werden, sodass das die Endverzahnung nach genau einem vollständigen Schleifhub erzeugt ist.

In einer Weiterbildung ist vorgesehen, dass das Schleifwerkzeug in einer Zustellbewegung dem Halbfertigteil zugestellt wird, wobei die Zustellbewegung senkrecht zu der Werkstückachse erfolgt. Insbesondere erfolgt die Zustellbewegung radial zu dem Halbfertigteil, wobei das Schleifwerkzeug bei der Zustellung mit der Vorverzahnung in Eingriff gebracht wird.

Weiterhin ist vorgesehen, dass das Schleifwerkzeug in einer Shiftbewegung vor, während oder nach der Hubbewegung relativ zu dem Halbfertigteil bewegt wird, wobei die Shiftbewegung tangential zu dem rotierenden Halbfertigteil erfolgt. Insbesondere erfolgt die Shiftbewegung simultan oder sequentiell zu der Hubbewegung. Im Speziellen wird das Schleifwerkzeug zur Umsetzung der Shiftbewegung entweder nach jedem bearbeiteten Teil oder erst bei Erreichen einer bestimmten Verschleißgröße um einen fest definierten Betrag verschoben. Bevorzugt wird bei dem einstufigen Wälzschleifverfahren auf einen sogenannten Shiftsprung verzichtet.

Durch die Shiftbewegung kann der Ausnutzungsgrad der Schleifschnecke und damit die Standzeit weiter verbessert werden kann. Zudem erfolgt eine gleichmäßigere Erwärmung des Werkzeugs, sodass der Wärmeeintrag an den Randzonen weiter reduziert werden kann.

In einer weiteren konkreten Ausführung ist vorgesehen, dass die Vorverzahnung in dem Weichbearbeitungsprozess mittels eines ein- oder mehrstufigen Wälzfräsverfahrens in das Rohteil eingebracht wird. Insbesondere wird die Vorverzahnung mittels Axial-, Radial-, Radial-Axial-, Tangential- oder Diagonalwälzfräsen in das Rohteil eingebracht. Hierzu kann ein rotierendes Wälzfräswerkzeug wahlweise im Gleichlauf oder im Gegenlauf betrieben werden. Dabei setzt sich die Schnittbewegung aus einer Rotation des Fräswerkzeugs und einer überlagerten Vorschubbewegung zusammen. Im Speziellen kann die Vorverzahnung in einer zweihubigen Bearbeitung, auch als Zweischnittbearbeitung bekannt, in das Rohteil eingebracht werden, wobei eine Schruppbearbeitung auf einen Hub und eine Schlichtbearbeitung auf einen Rückhub gelegt ist. Beispielsweise kann das Fräswerkzeug bei der Schruppbearbeitung im Gleichlauf und bei der Schlichtbearbeitung im Gegenlauf betrieben werden.

Es ist somit eine Überlegung der Erfindung, ein Verfahren vorzuschlagen, welches sich durch einen besonders vielseitigen und einfachen Weichbearbeitungsprozess auszeichnet.

In einer weiteren Umsetzung der Erfindung ist vorgesehen, dass das Halbfertigteil nach dem Weichbearbeitungsprozess und/oder vor dem Feinbearbeitungsprozess mittels eines Härteverfahrens gehärtet wird. Insbesondere wird das Halbfertigteil mittels Einsatzhärten gemäß DIN EN 10084 gehärtet. Vorzugsweise wird das Halbfertigteil mittels eines Niederdruck- oder Hochdruckverfahrens einsatzgehärtet. Prinzipiell kann als Werkstoff für das Verzahnungsbauteil ein Vergütungsstahl gemäß DIN EN 10083 eingesetzt werden. Bevorzugt jedoch wird als Werkstoff für das Verzahnungsbauteil ein Einsatzstahl gemäß DIN EN 10084 verwendet. In dem anschließenden Feinbearbeitungsprozess erfolgt ein möglichst geringer Abtrag der gehärteten Randschicht, insbesondere an den Zahnflanken, bei gleichzeitiger Einhaltung der Geometrie- und Oberflächenanforderungen, wobei hierzu das Aufmaß, wie bereits beschrieben, entsprechend gering gewählt ist.

Durch das Härten des Halbfertigteils wird ein Verfahren vorgeschlagen, welches sich durch eine Erhöhung der Verschleißfestigkeit und Flankentragfähigkeit bei gleichzeitig hoher Zähigkeit im Bauteilkern des Verzahnungsbauteils auszeichnet. Vorzugsweise ist das Verfahren zum Härten als verzugsarmes Verfahren ausgebildet.

In einer alternativen oder optional ergänzenden Umsetzung ist vorgesehen, dass das Halbfertigteil nach dem Weichbearbeitungsprozess in einem Entgratungsprozess entgratet wird. Insbesondere dient der Entgratungsprozess der Entfernung des infolge der Fräsbearbeitung verbliebenen Grats an der Vorverzahnung sowie dem Abrunden der Kanten der Vorverzahnung. Insbesondere erfolgt das Entgraten des Halbfertigteils mittels elektrochemischen Entgraten. Vorzugsweise reiht sich der Entgratungsprozess in der Prozesskette zwischen dem Weichbearbeitungsprozess und dem Härtungsprozess ein.

Es wird somit ein Verfahren vorgeschlagen, welches sich aufgrund des Entgratungsprozesses durch eine besonders werkzeugschonende Bearbeitung des Halbfertigteils in dem nachfolgenden Feinbearbeitungsprozess auszeichnet. Somit kann die Standzeit des Schleifwerkzeugs weiter verbessert werden.

In einer weiteren Konkretisierung ist vorgesehen, dass das Schleifwerkzeug in einem zweistufigen Abrichtprozess mittels eines Abrichtwerkzeugs abgerichtet wird. Insbesondere wird hierzu ein rotierendes Abrichtwerkzeug eingesetzt, welches mit dem Profil des Schleifwerkzeugs in Eingriff gebracht wird. Das Abrichtwerkzeug kann als eine Profilrolle oder eine Formrolle oder ein Abrichtrad ausgebildet sein. Besonders bevorzugt ist das Abrichtwerkzeug als eine mehrrillige, insbesondere dreirillige, Vollprofilrolle ausgebildet. Vorzugsweise wird die Rotationsbewegung im Abrichtprozess mit einer radialen Vorschubbewegung überlagert. Falls das Abrichtwerkzeug nicht die gesamte Breite des Schleifwerkzeugs abdeckt, ist zusätzlich ein Seitenvorschub des Abrichtwerkzeugs notwendig.

Gemäß dieser Ausführung wird in einer ersten Stufe das Schleifwerkzeug profiliert und in einer zweiten Stufe das Schleifwerkzeug geschärft. Insbesondere wird in der ersten Stufe eine grobe Geometrie des Schleifwerkzeugs wiederhergestellt. Insbesondere wird in der zweite Stufe die Sollgeometrie sowie die Oberfläche des Schleifwerkzeugs erzeugt.

Beispielsweise kann in der ersten Stufe die Geometrie des Schleifwerkzeugs in bis zu neun Hüben wiederhergestellt werden, wobei in der zweiten Stufe eine für die Schleifbearbeitung optimale Schleifschneckenoberfläche in bis zu zwei Hüben erzeugt wird.

In einer weiteren konkreten Weiterbildung wird das Schleifwerkzeug bei einer Abrichtbewegung in einem Gleichlauf-Abrichtmodus betrieben. Dadurch soll eine schnittigere Topographie des Schleifwerkzeugs erzeugt werden. Zwar wird dadurch die erzeugbare Oberflächengüte des Bauteils verschlechtert, jedoch hat die rauere Oberfläche des Schleifwerkzeugs eine geringere Wärmeentwicklung zur Folge. Besonders bevorzugt kann die negative Auswirkung auf die Oberflächengüte durch die Umstellung des Geschwindigkeitsverhältnisses in der Schleifbearbeitung von Gleichlauf auf Gegenlauf des Schleifwerkzeugs kompensiert werden.

Ein weiterer Gegenstand der Erfindung betrifft eine Verzahnungsschleifmaschine, welche zur Umsetzung eines Feinbearbeitungsprozess mit einem Schleifwerkzeug an einem Halbfertigteil ausgebildet und/oder geeignet ist, wobei das Halbfertigteil eine Vorverzahnung mit einem gegenüber einer Endverzahnung festgelegten Aufmaß aufweist. Insbesondere dient die Verzahnungsschleifmaschine zur Durchführung des Feinbearbeitungsprozesses und/oder des Abrichtprozesses gemäß des zuvor beschriebenen Verfahrens. Die Verzahnungsschleifmaschine weist hierzu eine Steuerungseinrichtung auf, wobei die Steuerungseinrichtung ausgebildet ist, das Schleifwerkzeug in einem einstufigen Wälzschleifverfahren zum vollständigen Abtragen des Aufmaßes des Halbfertigteils in einer einzigen Hubbewegung zu steuern, sodass eine Endverzahnung eines Verzahnungsbauteils hergestellt wird.

Weitere Merkmale, Vorteile und Wirkungen der Erfindung ergeben sich aus der nachfolgenden Beschreibung bevorzugter Ausführungsbeispiele der Erfindung. Dabei zeigen:
Figur 1 eine schematische Darstellung eines Schleifwerkzeugs und eines zu bearbeitenden Werkstücks als ein Ausführungsbeispiel der Erfindung;
Figur 2 eine Detailansicht eines Eingriffbereichs zwischen dem Schleifwerkzeug und dem Werkstück.

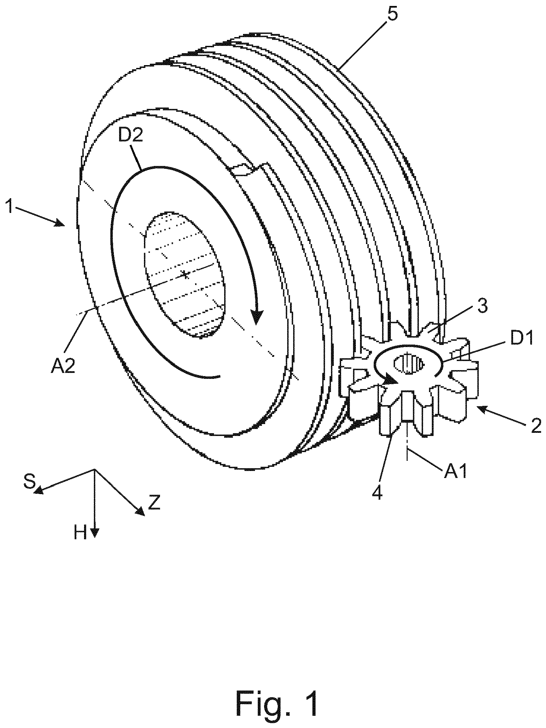

Figur 1 zeigt in einer schematischen Darstellung ein Schleifwerkzeug 1 für eine Verzahnungsschleifmaschine, nicht dargestellt, sowie ein zu bearbeitendes Werkstück 2 - im Weiteren als Halbfertigteil bezeichnet - in Form eines Zahnrads, z.B. ein Planetenrad. In dem gezeigten Ausführungsbeispiel ist ein Feinbearbeitungsprozess dargestellt, wobei das Halbfertigteil 2 bereits zuvor einem Weichbearbeitungsprozess unterzogen wurde, wodurch das Halbfertigteil 2 bereits eine umlaufende Vorverzahnung 3 aufweist. In dem Weichbearbeitungsprozess wird die Vorverzahnung 3 in ein zylindrisches Rohteil, nicht dargestellt, mittels Wälzfräsen eingebracht. Beispielsweise ist die Vorverzahnung 3 eine in die Mantelfläche des Rohteils eingebrachte, endkonturnahe Zahnlückengeometrie, welche in dem Feinbearbeitungsprozess auf Endkontur bearbeitet wird.

Optional kann das Halbfertigteil 2 nach dem Weichbearbeitungsprozess und vor dem Feinbearbeitungsprozess zusätzlich einem Entgratungsprozess und/oder einem Härtungsprozess unterzogen worden sein. Beispielsweise schließt sich der Entgratungsprozess an den Weichbearbeitungsprozess an, wobei das mit der Vorverzahnung 3 versehene Halbfertigteil 2 in dem Entgratungsprozess entgratet wird. Beispielsweise erfolgt das Entgraten mittels eines elektrochemischen Entgratungsverfahrens. Beispielsweise schließt sich der Härtungsprozess nach dem Weichbearbeitungsprozess bzw. den Entgratungsprozess an, wobei das Halbfertigteil 2 in dem Härtungsprozess gehärtet wird. Beispielsweise kann das Halbfertigteil 2 mittels Einsatzhärten gehärtet werden.

In dem anschließenden Feinbearbeitungsprozess wird die Vorverzahnung 3 durch das Schleifwerkzeug 1 derart bearbeitet, sodass eine Endverzahnung 4 eines fertigen Verzahnungsbauteils erzeugt wird. Das Schleifwerkzeug 1 ist in dem gezeigten Ausführungsbeispiel als eine mehrgängige Schleifschnecke ausgebildet, welche an ihrem Außenumfang ein mit der Vorverzahnung in Eingriff stehendes Schneckenprofil 5 aufweist. Dabei erfolgt die Bearbeitung der Vorverzahnung 3 durch ein kontinuierliches Wälzschleifen, wobei die Endverzahnung 4 durch ein kontinuierliches Abwälzen des Schneckenprofils 5 in der zu bearbeitenden Vorverzahnung 3 spanend erzeugt wird.

Während des Feinbearbeitungsprozesses wird das Halbfertigteil 2 um eine Werkstückachse A1 und das Schleifwerkzeug 1 um eine Werkzeugachse A2 rotiert. In einer Zustellbewegung Z wird das Schleifwerkzeug 1 zu Beginn des Feinbearbeitungsprozess dem Halbfertigteil 2 zugestellt, wobei das Schneckenprofil 5 mit der Vorverzahnung 3 in Eingriff gebracht wird. Dabei erfolgt die Zustellbewegung Z in einer zu dem Halbfertigteil 2 radial hinwärts gerichteten Richtung.

Während des Wälzschleifens wälzen das Schleifwerkzeug 1 und das Halbfertigteil 2 analog zu einem Schneckengetriebe ineinander ab, wobei die Schnecke dem Schleifwerkzeug 1 und das Schneckenrad dem Halbfertigteil 2 entspricht. Der Wälzvorschub ergibt sich dabei aus einer vom Halbfertigteil 2 ausgeführten rotatorischen und einer vom Schleifwerkzeug 1 ausgeführten translatorischen Wälzkomponente. Zusätzlich wird das Schleifwerkzeug 1 in einer Hubbewegung H relativ zu dem Halbfertigteil 2 bewegt, wobei die Hubbewegung H als eine in Bezug auf die Werkstückachse A1 axiale Bewegung durchgeführt wird. Dabei erfolgt eine vollumfängliche Bearbeitung über die gesamte Zahnbreite der Vorverzahnung 3 des Halbfertigteils 2 in nur einer einzigen Hubbewegung H. Voraussetzung für diese Prozessauslegung ist jedoch die genaue Abstimmung aller Stellgrößen, sodass sowohl die Anforderungen an höchste Oberflächengüten erfüllt werden als auch ein schädigungsfreier metallografischer Zustand gewährleistet wird. Hierzu ist ein streng definierter geometrischer Zustand der Vorverzahnung 3 erforderlich, welcher durch die Weichbearbeitung und nachfolgende Härtung erzeugt wird.

Während des Schleifvorgangs rotiert das Halbfertigteil 2 in einer Werkstückdrehrichtung D1 um seine Werkstückachse A1 und das Schleifwerkzeug 1 in einer Werkzeugdrehrichtung D2 um seine Werkzeugachse A2. Dabei erfolgt die Bearbeitung durch das Schleifwerkzeug 1 in einem sogenannten Gegenlauf, wobei ein Vorschubgeschwindigkeitsvektor des Halbfertigteils 2 und ein Vektor der Schnittgeschwindigkeit des Schleifwerkzeugs 1 gegengerichtet sind. Anders gesagt sind die Hubbewegung H und die Werkzeugdrehrichtung D2 des Schleifwerkzeugs 1 gleichgerichtet.

Zusätzlich kann das Schleifwerkzeug 1 über eine Shiftbewegung S tangential zu dem Halbfertigteil 2 bewegt werden. Beispielsweise ist die Shiftbewegung eine in axialer Richtung in Bezug auf die Werkzeugachse A2 gerichtete Bewegung. Die Shiftbewegung S kann vor, während oder nach der Hubbewegung H durchgeführt werden. Durch die Shiftbewegung S kann der Ausnutzungsgrad des Schleifwerkzeugs 1 und damit dessen Standzeit verbessert werden. Beispielsweise kann die Shiftbewegung S kontinuierlich während des Wälzschleifens durchgeführt werden. Alternativ kann die Shiftbewegung S jedoch auch nach der Bearbeitung von einem oder mehreren Halbfertigteilen 2 oder bei Erreichen einer bestimmten Verschleißgröße durchgeführt werden.

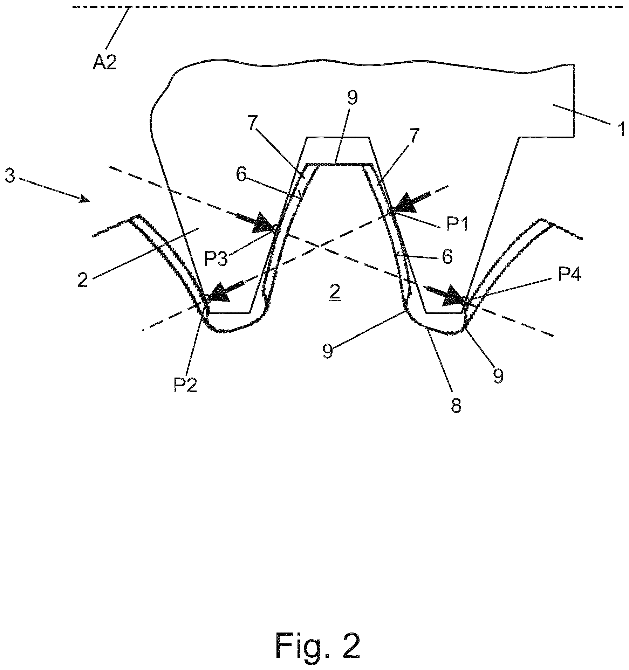

Figur 2 zeigt in einer Detailansicht einen Eingriffsbereich zwischen dem Schleifprofil 5 des Schleifwerkzeugs 1 und der Vorverzahnung 3 des Halbfertigteils 2. Beim kontinuierlichen Wälzschleifen ergeben sich aufgrund der hohen Überdeckung zwischen Schleifwerkzeug 1 und Werkstück 2 immer mehrere gleichzeitig im Eingriff befindliche Berührungspunkte P1 bis P4. Die beiden Berührpunkte P1, P2 befinden sich dabei immer auf einer ersten Eingriffslinien L1 und die beiden Berührungspunkte P3, P4 immer auf einer zweiten Eingriffslinie L2 zwischen Schleifwerkzeug 1 und Werkstück 2.

Die Vorverzahnung 3 weist an ihren Zahnflanken 6 ein Aufmaß 7 auf, welches im Rahmen des Feinbearbeitungsprozesses durch das Schleifwerkzeug 1 entfernt wird, sodass die Endverzahnung 4 erzeugt wird. Das Aufmaß 7 ist dabei an den Zahnflanken 6 vorgesehen, wobei Zahngrund 8 und Zahnkopf 9 der Vorverzahnung 3 bereits nach dem Weichbearbeitungsprozess auf Endkontur bearbeitet sind.

Im Rahmen des Feinbearbeitungsprozesses beschreibt das einstufige Wälzschleifverfahren die Bearbeitung des Halbfertigbauteils 2 in einem Hub mit konstanten Stellgrößen und demzufolge auch einem konstantem Spanvolumen. Das einstufige Wälzschleifverfahren zeichnet sich durch eine Zeitersparnis, eine geringere Werkzeugbelastung sowie eine dadurch erreichte Effizienzsteigerung. Durch die Reduzierung des Aufmaßes 7 soll die Effizienz des Feinbearbeitungsprozesses weiter gesteigert werden, während gleichzeitig das Qualitätsniveau im Hinblick auf die geometrischen sowie metallografischen Eigenschaften angehoben werden soll.

Da das Aufmaß 7 eine der wichtigsten Haupteinflussgrößen auf das Zeitspanvolumen darstellt, kann durch eine Reduzierung des Zahnflankenaufmaßes das Zeitspanvolumen deutlich reduziert werden. Beispielsweise ist das Aufmaß auf mindestens oder genau 0,045 mm reduziert. Dabei beschränkt sich das Aufmaß 7 sowie die Bearbeitung durch das Schleifwerkzeug 1 auf die gehärteten Zahnflanken 6, da nur diese in einer späteren Einbausituation mit entsprechenden Gegenflanken in Berührung kommen.

Zudem weist die Vorverzahnung 7 eine sogenannte Protuberanz in einem Zahnfußbereich 10 auf, welche durch eine Ausrundung bzw. einen Unterschnitt in dem Zahnfußbereich 10 gebildet ist. Dadurch wird eine Bildung von Kerben und/oder Rissen in dem Zahnfußbereich 10 beim Abtragen des Aufmaßes 7 verhindert. Zudem wird in dem Feinbearbeitungsprozess zusätzlich auf eine Bearbeitung des Zahngrunds 8 durch das Schleifwerkzeug 1 verzichtet. Dabei berührt das Schleifwerkzeug 1 beim Abtragen des Aufmaßes 7 die Ausrundung im Zahnfußbereich 10 nicht, wodurch eine Bearbeitung im Zahngrund 8 vermieden wird. 10 fehlt im Bild!!!

In dem Feinbearbeitungsprozess wird das Aufmaß 7 bei der Hubbewegung H vergleichbar zu einer Schlichtbearbeitung abgetragen, welche in dem zuvor beschriebenen Gegenlauf erfolgt, um eine möglichst hohe Oberflächengüte zu erreichen.

Zudem kann durch die Wahl eines Schleifkorns der Schleifschnecke der Schleifvorgang zusätzlich beeinflusst werden. Beispielsweise nimmt das Schleifkorn die Form kleiner Dreiecke, z.B. das sogenannte 3M Precision-Shaped Grain (PSG), an. Somit kann das Zeitspanvolumen und damit auch die Wirtschaftlichkeit des Prozesses weiter gesteigert werden.

Ferner kann in einem Abrichtprozess, nicht dargestellt, das Schleifwerkzeug 1 durch eine Abrichtung in einem Gleichlauf-Abrichtmodus mit einer schnittigeren Topographie versehen werden, wodurch zwar die erzeugbare Oberflächengüte des Bauteils verschlechtert, jedoch eine geringere Wärmeentwicklung erzeugt wird. Somit kann ein Wärmeeintrag in die Randzonen der Zahnflanken 6 reduziert werden. Durch die Gegenlaufbearbeitung des Halbfertigteils 2 in dem Feinbearbeitungsprozess kann die negative Auswirkung auf die Oberflächengüte wieder kompensiert werden, sodass ein verbesserter Schleifprozess hinsichtlich Wärmeeintrag und Oberflächengüte umgesetzt wird.

Beispielsweise kann der Feinbearbeitungsprozess über weitere Stellgrößen wie z.B. ein höherer Vorschub der Hubbewegung und/oder höhere Schnittgeschwindigkeiten modifiziert werden. Voraussetzung hierfür ist neben einer stabilen Auslegung des Schleifprozesses über die gesamte Werkzeugstandmenge eine fähige und stabile Prozesskette von der Weichbearbeitung über das Härten hin zum kontinuierlichen Wälzschleifen, sodass toleranzüberschreitende Schwankungen des Aufmaßes 7 möglichst vermieden werden.

### Bezugszeichen

- 1: Schleifwerkzeug
- 2: Halbfertigteil (Werkstück)
- 3: Vorverzahnung
- 4: Endverzahnung
- 5: Schleifprofil
- 6: Zahnflanken
- 7: Aufmaß
- 8: Zahngrund
- 9: Zahnkopf
- 10: Zahnfußbereich

- A1: Werkstückachse
- A2: Werkzeugachse
- D1: Werkstückdrehrichtung
- D2: Werkzeugdrehrichtung
- L1, L2: Eingriffslinien
- P1 - P4: Berührungspunkte
- H: Hubbewegung
- S: Shiftbewegung
- Z: Zustellbewegung

## Patentansprüche

1. Verfahren zur Fertigung eines Verzahnungsbauteils, insbesondere eines Zahnrads, bei dem:
- in einem Weichbearbeitungsprozess eine Vorverzahnung (3) mit einem gegenüber einer Endverzahnung (4) festgelegten Aufmaß (7) in ein Rohteil eingebracht wird, sodass ein Halbfertigteil (2) erzeugt wird,
- in einem Feinbearbeitungsprozess das Aufmaß (7) abgetragen wird und die Endverzahnung (4) des Verzahnungsbauteils hergestellt wird,
**dadurch gekennzeichnet, dass**
das Aufmaß (7) in einem einstufigen Wälzschleifverfahren mittels eines Schleifwerkzeugs (1) abgetragen wird, wobei das Schleifwerkzeug (1) das Aufmaß in einer einzigen Hubbewegung (H) vollständig abträgt.

2. Verfahren nach Anspruch 1, **dadurch gekennzeichnet, dass** das Schleifwerkzeug (1) bei der Hubbewegung (H) in einem Gegenlauf-Schleifmodus betrieben wird.

3. Verfahren nach Anspruch 1 oder 2, **dadurch gekennzeichnet, dass** in dem Weichbearbeitungsprozess das Aufmaß (7) mit einem Wert von maximal 100 Mikrometer erzeugt wird.

4. Verfahren nach einem der vorhergehenden Ansprüche, **dadurch gekennzeichnet, dass** das Schleifwerkzeug (1) als eine Schleifschnecke ausgebildet ist, wobei das Aufmaß (7) durch eine Abwälzkinematik zwischen Schleifwerkzeug (1) und Halbfertigteil (2) abgetragen wird.

5. Verfahren nach einem der vorhergehenden Ansprüche, **dadurch gekennzeichnet**, dassdas zu bearbeitende Halbfertigteil (2) um eine Werkstückachse (A1) rotiert wird, wobei die Hubbewegung (H) axial zu der Werkstückachse (A1) erfolgt.

6. Verfahren nach Anspruch 5, **dadurch gekennzeichnet, dass** das Schleifwerkzeug (1) in einer Zustellbewegung (Z) dem Halbfertigteil (2) zugestellt wird, wobei die Zustellbewegung (Z) senkrecht zu der Werkstückachse (A1) erfolgt.

7. Verfahren nach Anspruch 5 oder 6, **dadurch gekennzeichnet, dass** das Schleifwerkzeug (1) in einer Shiftbewegung (S) vor, während oder nach der Hubbewegung (H) relativ zu dem Halbfertigteil (2) bewegt wird, wobei die Shiftbewegung (S) tangential zu dem rotierenden Halbfertigteil (2) erfolgt.

8. Verfahren nach einem der vorhergehenden Ansprüche, **dadurch gekennzeichnet, dass** die Vorverzahnung (3) in dem Weichbearbeitungsprozess mittels eines Wälzfräsverfahrens in das Rohteil eingebracht wird.

9. Verfahren nach einem der vorhergehenden Ansprüche, **dadurch gekennzeichnet, dass** das Halbfertigteil (2) nach dem Weichbearbeitungsprozess in einem Härtungsprozess gehärtet wird.

10. Verfahren nach einem der vorhergehenden Ansprüche, **dadurch gekennzeichnet, dass** das Halbfertigteil (2) nach dem Weichbearbeitungsprozess in einem Entgratungsprozess entgratet wird.

11. Verfahren nach einem der vorhergehenden Ansprüche, **dadurch gekennzeichnet, dass** das Schleifwerkzeug (1) in einem zweistufigen Abrichtprozess mittels eines Abrichtwerkzeugs abgerichtet wird, wobei das Schleifwerkzeug (1) in einer ersten Stufe profiliert und in einer zweiten Stufe geschliffen wird.

12. Verfahren nach Anspruch 11, **dadurch gekennzeichnet, dass** das Abrichten des Schleifwerkzeugs (1) in einem Gleichlauf-Abrichtmodus erfolgt.

13. Verzahnungsschleifmaschine zur Umsetzung eines Feinbearbeitungsprozess mit einem Schleifwerkzeug (1) an einem Halbfertigteil (2), wobei das Halbfertigteil (2) eine Vorverzahnung (3) mit einem gegenüber einer Endverzahnung (4) festgelegten Aufmaß (7) aufweist, **dadurch gekennzeichnet, dass** die Verzahnungsschleifmaschine eine Steuerungseinrichtung aufweist, wobei die Steuerungseinrichtung ausgebildet ist, das Schleifwerkzeug (1) in einem einstufigen Wälzschleifverfahren zum vollständigen Abtragen des Aufmaßes (7) des Halbfertigteils (2) in einer einzigen Hubbewegung (H) zu steuern, sodass eine Endverzahnung (4) eines Verzahnungsbauteils hergestellt wird.
